# EUROPÄISCHE PATENTSCHRIFT

(11) **EP 0 510 138 B1**
(45) Veröffentlichungstag und Bekanntmachung des Hinweises auf die Patenterteilung: **03.01.1996**
(21) Anmeldenummer: 91918520.7
(22) Anmeldetag: 26.10.1991
(51) Int. Cl.: F16D 65/095, F16D 65/097, F16D 55/228, F16D 55/226

(54) **TEILBELAGSCHEIBENBREMSE UND BREMSKLOTZ**
PARTIALLY LINED DISC BRAKE AND BRAKE PAD
FREIN A DISQUE A GARNITURE PARTIELLE ET PLAQUETTE DE FREIN

(30) Priorität: 13.11.1990 DE 4036063; 19.09.1991 DE 4131130
(43) Veröffentlichungstag der Anmeldung: 28.10.1992
(73) Patentinhaber: ALFRED TEVES GmbH, D-60441 Frankfurt (DE)
(72) Erfinder: WEILER, Rolf, D-6239 Eppstein 2 (DE); BACH, Uwe, D-6272 Niedernhausen (DE); PANEK, Claus-Peter, D-6374 Steinbach (DE)
(86) Internationale Anmeldenummer: EP9102027
(87) Internationale Veröffentlichungsnummer: WO9208908

(56) Entgegenhaltungen:
- EP-A- 0 037 305
- EP-A- 0 336 103
- DE-A- 1 475 288
- DE-A- 2 038 649
- DE-A- 3 833 553
- DE-B- 2 223 829

## Beschreibung

Die Erfindung betrifft die Abstützung von Bremsklötzen in einer Teilbelagscheibenbremse und dazu gehörige Bremsklötze.

Eine Teilbelagscheibenbremse gemäß dem Oberbegriff des Hauptanspruchs ist beispielsweise aus der DE-OS 38 33 553 bekannt. Hier sind die Bremsbacken aus einem Schacht des Bremsgehäuses radial nach außen entnehmbar, ohne daß dazu das Bremsgehäuse ausgebaut oder aufgeklappt werden muß. Die beim Bremsen auftretenden Umfangskräfte werden von den Bremsklötzen auf axiale Vorsprünge des Bremsgehäuses übertragen, die den Schacht in Umfangsrichtung begrenzende, ebene Abstützflächen aufweisen, an denen die Bremsklötze anliegen. Um die Bremsklötze gegen Verschiebungen in radialer Richtung zu sichern, sind Haltestifte vorgesehen, die sich im radial äußeren Bereich des Schachtes in axialer Richtung quer über dessen Öffnung erstrecken und am Bremsgehäuse lösbar befestigt sind. Die Belaghalteplatten der Bremsklötze weisen Vorsprünge mit Öffnungen zum Druchgang der Haltestifte auf. Eine im Bereich der Haltestifte lösbar befestigte Feder drückt die Bremsklötze radial gegen die Haltestifte, um ein Klappern der Bremsklötze zu verhindern. Zum Ausbau der Bremsklötze müssen Feder und Haltestifte entfernt werden.

Diese bekannte Teilbelagscheibenbremse hat den Nachteil, daß im Rahmen der Fertigung des Bremsgehäuses relativ aufwendige Fräsarbeiten zur Bearbeitung der genannten ebenen Abstützflächen für die Bremsklötze anfallen. Auch die Führung und Befestigung der Bremsklötze an den Haltestiften erfordert einen erheblichen Fertigungs- und Montageaufwand.

Bei einer anderen, aus der DE-OS 14 75 288 bekannten Teilbelagscheibenbremse sind kreisbogenförmige Abstützflächen für die Bremsklötze vorgesehen, die nicht gefräst sind, sondern zusammen mit den Zylinderbohrungen der vier Bremszylinder gedreht werden. Die Bremsklötze werden an den Abstützflächen sowohl in radialer als auch in Umfangsrichtung abgestützt. An der Lösung ist jedoch nachteilig, daß die Bremsklötze nicht radial nach außen entnommen werden können. Zum Auswechseln der Bremsklötze muß das Bremsgehäuse ausgebaut werden, wodurch zusätzlicher Montageaufwand und damit verbundene Kosten anfallen.

Aufgabe der Erfindung ist es, eine Teilbelagscheibenbremse zu schaffen, bei der die zur Aufnahme der Umfangskräfte bestimmten Abstützflächen für die Bremsklötze zusammen mit der Bohrung des Bremszylinders gedreht werden können und bei der eine radiale Entnahme der Bremsklötze durch einen radial nach außen offenen Schacht des Bremsgehäuses möglich ist.

Die Lösung der Aufgabe ergibt sich aus dem kennzeichnenden Teil des Hauptanspruchs.

Die erfindungsgemäß gestalteten Abstützflächen haben die Form von Segmenten eines Zylinders mit einem größeren Radius als dem des Bremszylinders, wobei die Achsen beider Zylinder zusammenfallen. Die Anordnung erlaubt das Bohren oder Drehen der Abstützflächen zusammen mit der Bremszylinderbohrung in einem einzigen Arbeitsgang durch ein abgestuftes Werkzeug, das in verschiedenen axialen Bereichen verschiedene Radien aufweist. Das separate Fräsen der Abstützflächen und die damit verbundenen Fertigungskosten werden vorteilhaft eingespart. Gleichzeitig erstrecken sich die erfindungsgemäß gestalteten Abstützflächen in Richtung auf die radial äußere Öffnung des die Bremsklötze aufnehmenden Schachtes des Bremsgehäuses nur soweit, daß eine radiale Entnahme der Bremsklötze aus dem Schacht weiterhin möglich ist. Dies wirkt sich vorteilhaft auf die Montage- und Wartungskosten aus. Die kleinen Abstützflächen haben den weiteren Vorteil, daß die Korrosionsanfälligkeit der Bremsklotzhalterung vermindert wird.

Wenn gemäß Anspruch 2 an den erfindungsgemäß gestalteten Vorsprüngen des Bremsgehäuses weitere Abstützflächen zum Abstützen der Bremsklötze in radialer Richtung vorgesehen sind, an die sie mittels einer in Richtung Bremsscheibenachse wirkenden Feder angedrückt werden, so kann auf Haltestifte für die Bremsklötze verzichtet werden. Damit entfallen die Fertigungskosten für Haltestifte und für Bohrungen zu deren Befestigung am Bremsgehäuse.

Allerdings können bei der vorgeschlagenen Befestigung und Führung des Bremsklotzes an den Vorsprüngen des Bremsgehäuses unter Umständen gußtechnisch bedingte Funktionsmängel auftreten. Wenn nämlich die zur radialen Abstützung bestimmten Flächen der Vorsprünge beim Gießen des Bremsgehäuses nicht ganz exakt ausgeformt werden, so wird die Führung des Bremsklotzes in axialer Richtung beeinträchtigt. Dies kann u.a. auch zum Kippen des Bremsklotzes und zum unbeabsichtigten Schleifen an der Bremsscheibe führen. Es wäre zwar möglich, den Mangel durch nachträgliches Glattfräsen der gegossenen Flächen zu beheben, jedoch würden dadurch die Fertigungskosten erhöht.

In diesem Fall wird zur Vermeidung des genannten Nachteils eine Ausgestaltung gemäß Anspruch 3 empfohlen. Zur Befestigung und Führung der Bremsklötze ist ein Haltestift vorgesehen, der sich quer durch einen radial nach außen offenen Schacht des Bremsgehäuses erstreckt und dort lösbar befestigt ist. Die Belaghalteplatten der Bremsklötze sind mit radial nach außen weisenden Vorsprüngen und an den Vorsprüngen mit Öffnungen versehen, durch die der Haltestift hindurchragt, so daß die Bremsklötze am Haltestift in axialer Richtung verschiebbar geführt sind.

Diese Lösung hat den Vorteil, daß die Bremsklötze nicht an den radialen Flächen der Vorsprünge des Bremsgehäuses geführt werden. Gußtechnisch bedingte Unebenheiten der Flächen können sich daher nicht nachteilig auf die Führung der Bremsklötze auswirken. Eine Nachbearbeitung der Flächen ist nicht mehr nötig. Außerdem werden die Bremsklötze vereinfacht, da spezielle, zur Führung bestimmte Nasen der Belaghalteplatten entfallen. An den in Umfangsrichtung der Bremsscheibe liegenden Schmalseiten der Belaghalteplatten ist jeweils nur noch eine bogenförmige Ausbuchtung vorgesehen, die zur Übertragung der Umfangskraft an dem zugehörigen Vorsprung des Bremsgehäuses anliegt. Ein weiterer Vorteil dieser erfindungsgemäßen Anordnung besteht darin, daß die Führung der Bremsklötze weniger korrosionsanfällig ist.

In einer bevorzugten Ausführungsform gemäß Anspruch 4 ist nur ein einziger Haltestift vorgesehen. Diese Anordnung ist besonders einfach und erfordert nur geringe Material- und Montagekosten. Zum Austausch verschlissener Bremsklötze gegen neue muß der Monteur lediglich den einzigen Haltestift lösen und kann dann die Bremsklötze durch den Schacht des Bremsgehäuses radial nach außen entnehmen.

Um ein Klappern der Bremsklötze in ihren Führungen zu vermeiden, wird gemäß Anspruch 5 empfohlen, eine Niederhaltefeder vorzusehen, die die Bremsklötze gegenüber dem Haltestift vorspannt. In einer einfachen Ausgestaltungsform gemäß Anspruch 6 ist die Niederhaltefeder aus Federdraht gebogen und zwischen dem Haltestift und den Bremsklötzen verliersicher eingeklemmt.

In einer weiteren Ausführungsform gemäß Anspruch 7 sind zwei Haltestifte vorgesehen. Diese Anordnung ist aufwendiger und empfiehlt sich nur, wenn mit einem einzigen Haltestift Funktionsmängel auftreten sollten.

Mit den Ansprüchen 8 und 9 wird auch für entsprechend gestaltete Bremsklötze zur Verwendung in einem erfindungsgemäßen Bremsgehäuse um Schutz ersucht. Dasselbe gilt auch für eine Drahtfeder gemäß Anspruch 10.

Ausführungsbeispiele der Erfindung werden nachfolgend anhand der Zeichnungen näher erläutert.

Es zeigen
- Fig. 1: Eine Draufsicht auf das eine Teil eines zweiteiligen, erfindungsgemäßen Bremsgehäuses in einer ersten Ausführungsform, von der Bremsscheibenebene ausgehend betrachtet;
- Fig. 2: Einen in Fig. 1 mit A bezeichneten, vergrößerten Ausschnitt;
- Fig. 3: eine teilweise geschnittene Seitenansicht einer erfindungsgemäßen Teilbelagscheibenbremse in einer zweiten Ausführungsform;
- Fig. 4: eine teilweise geschnittene Draufsicht in Richtung D von Fig. 3.

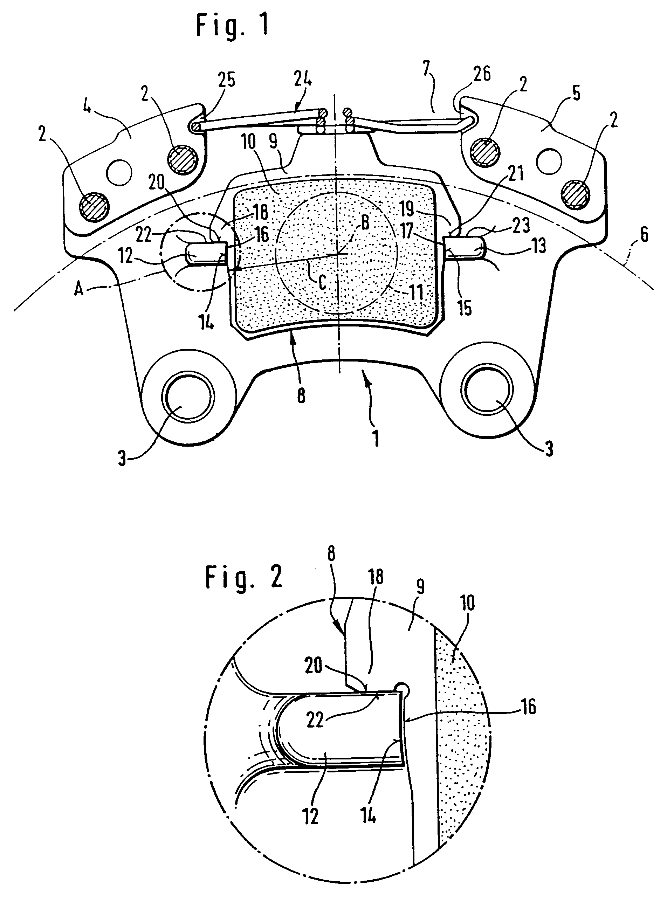

Das in Fig. 1 dargestellte eine Gußteil 1 eines erfindungsgemäßen, im wesentlichen aus zwei Gußteilen bestehenden Bremsgehäuses wird mittels Schrauben 2 mit dem zweiten Gußteil verschraubt. Die Bohrungen 3 sind zur Befestigung des Bremsgehäuses am Achsschenkel eines Kraftfahrzeugs bestimmt. Zwei Brückenabschnitte 4,5 ragen aus der Zeichenebene in Richtung auf den Betrachter hervor und bilden zusammen mit entsprechenden Abschnitten des nicht gezeigten zweiten Gußteils eine die Bremsscheibe seitlich übergreifende Sattelbrücke. Die Umfangskontur der Bremsscheibe ist durch die Strichelung 6 angedeutet.

Zwischen den beiden Brückenabschnitten 4,5 ist ein radial nach außen offener Schacht 7 angeordnet, durch den hindurch die Bremsklötze radial nach außen entnommen bzw. eingefügt werden können. Der Bremsklotz 8 besteht aus einer Belaghalteplatte 9 und einem darauf befestigten Reibbelag 10. Bei Betätigung einer nicht gezeigten hydraulischen Betätigungsvorrichtung wird der Bremsklotz 8 durch einen in einem Bremszylinder gleitend angeordneten Bremskolben in Richtung auf den Betrachter zugeschoben, bis er mit der Bremsscheibe in Anlage kommt. Die Bohrung des durch den Bremsklotz 8 verdeckten Bremszylinders ist durch die Strichelung 11 angedeutet. Im mittleren Bereich des Bremsgehäuses sind an dem dargestellten ersten Gußteil 1 ebenso wie an dem nicht gezeigten Gußteil je zwei in Umfangsrichtung der Bremsscheibe gegenüberliegende Vorsprünge 12,13 angeordnet, die aus der Zeichenebene auf den Betrachter zu herausragen. Zwischen den Vorsprüngen 12,13 ist am ersten Gußteil 1 ebenso wie am zweiten Gußteil je ein Bremsklotz 8 angeordnet. Wie man besser in Figur 2 erkennen kann, weisen die Vorsprünge 12,13 Abstützflächen 14,15 auf, an denen gebogenene Anlageflächen 16,17 der Belaghalteplatten 9 anliegen. Dadurch werden die bei Betätigung der Bremse am Bremsklotz 8 auftretenden Umfangskräfte auf das Gußteil 1, also auf das Bremsgehäuse übertragen. Die Abstützflächen 14,15 haben die Form von Segmenten einen Zylinders, dessen Radius C in Fig. 1 eingezeichnet ist und dessen Mittelachse B mit der Achse des gestrichelt angedeuteten Bremszylinders 11 übereinstimmt. Die gebogenen Anlageflächen 16,17 der Belaghalteplatte 9 sind an die Abstützflächen 14,15 angepaßt. Zwischen den Flächen 14 und 16 bzw. 15 und 17 ist ein Spiel vorgesehen, um fertigungstechnische Maßtoleranzen und die Wärmeausdehnung aufzufangen. Die Abstützflächen 14,15 erstrecken sich in Richtung auf die radial äußere Öffnung des Schachtes 7 zu nur soweit, daß eine radiale Entnahme des Bremsklotzes 8 durch den Schacht 7 nicht von den Vorsprüngen 12,13 verhindert wird. Die Belaghalteplatte 9 ist mit zwei Vorsprüngen 18,19 versehen, die unmittelbar neben den Bereichen der Anlageflächen 16,17 in Umfangsrichtung abstehen. Die direkt an die Anlageflächen 16,17 angrenzenden und auf diesen im wesentlichen senkrecht stehenden Schmalseiten 20,21 der Vorsprünge 18,19 liegen an den radial äußeren Seiten 22,23 der Vorsprünge 12,13 des Gußteils 1 an, wie man am besten in Fig. 2 erkennt. Der Bremsklotz 8 ist also an den Vorsprüngen 12,13 auch in radialer Richtung abgestützt und wird gegen diese mittels einer Drahtfeder 24 radial nach innen angedrückt. Die Drahtfeder 24 ist an Ausnehmungen 25,26 der Brückabschnitte 4,5 verankert, in die sie eingreift. Sie stützt sich einerseits am Bremsgehäuse und andererseits an der radial äußeren Schmalseite der Belaghalteplatte 9 der Bremsklötze 8 ab.

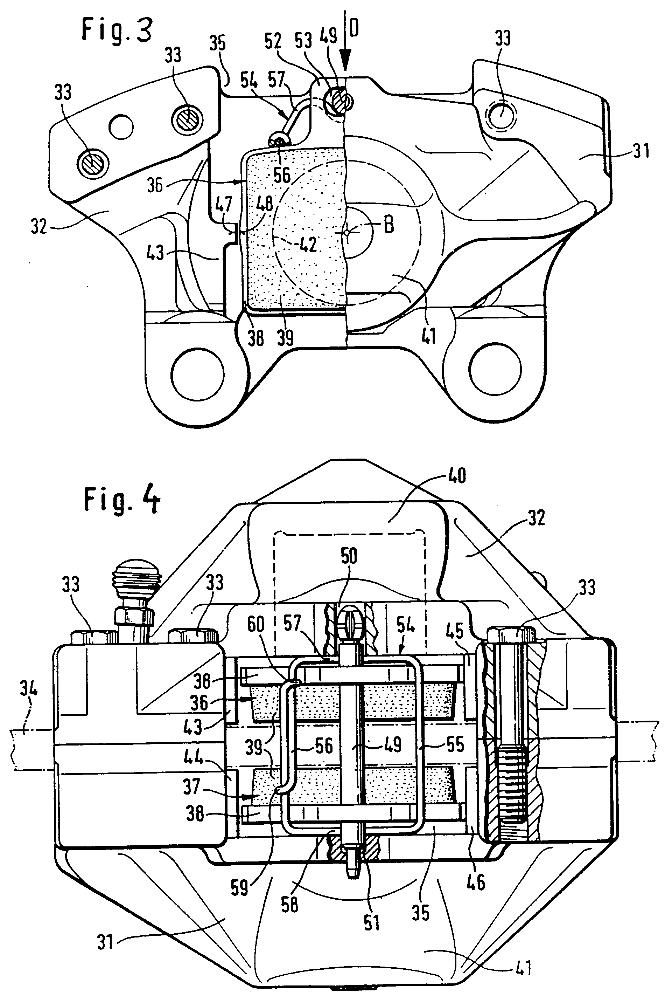

Das Bremsgehäuse 31,32 der in den Fig. 3 und 4 dargestellten Teilbelagscheibenbremse besteht im wesentlichen aus zwei Gußteilen 31,32, die mittels Schrauben 33 miteinander verbunden sind. Das Bremsgehäuse 31,32 umgreift den äußeren Rand der Bremsscheibe 34 und weist in seiner Mitte einen radial nach außen offenen Schacht 35 auf, durch den hindurch die beiderseits der Bremsscheibe 34 angeordneten Bremsklötze 36,37 ein- und ausgebaut werden können. Die Bremsklötze 36,37 bestehen jeweils aus einer Belaghalteplatte 38 und einem Reibbelag 39. Bei Druckbeaufschlagung der hydraulischen Bremszylinder 40,41 werden die Bremsklötze 36,37 durch zwei in den Bremszylindern 40,41 angeordnete, in Fig. 3 durch Strichelung 42 angedeutete Bremskolben in axialer Richtung gegen die Bremsscheibe 34 gedrückt. Das Bremsgehäuse 31,32 ist mit vier in Richtung Bremsscheibe 34 hervorstehenden Vorsprüngen 43,44,45,46 versehen, von denen jeweils zwei an jedem Gußteil 31,32 und in Umfangsrichtung der Bremsscheibe 34 neben den Bremsklötzen 36,37 angeordnet sind. Die entsprechend einem Zylinder mit Achse B gebogenen Abstützflächen 47 der Vorsprünge 43,44,45,46 sind zur Anlage von gebogenen Ausbuchtungen 48 der Belaghalteplatten 38 bestimmt, wobei die beim Bremsen auftretenden Umfangskräfte von den Bremsklötzen 36,37 auf das Bremsgehäuse 31,32 übertragen werden.

Zur Halterung und Führung der Bremsklötze 36,37 ist ein Haltestift 49 vorgesehen, der im Bereich des Schachtes 35 in axialer Richtung angeordnet und in zwei Bohrungen 50,51 des Bremsgehäuses 31,32 lösbar befestigt ist. Die Belaghalteplatten 38 der Bremsklötze 36,37 weisen jeweils einen radial nach außen abstehenden Vorsprung 52 mit einer Öffnung 53 zum Durchgang des Haltestiftes 49 auf. Die Bremsklötze 36,37 sind am Haltestift 49 axial verschiebbar geführt und mittels einer Drahtfeder 54 gegen den Haltestift 49 vorgespannt, damit sie nicht klappern. Die Drahtfeder 54 weist zwei parallele Drahtabschnitte 55,56 auf, die in axialer Richtung angeordnet sind und an einer Schmalseite der Belaghalteplatten 38 auf die Bremsklötze 36,37 drücken. Zwei weitere, wellenförmig gebogene Drahtabschnitte 57,58 verlaufen im wesentlichen senkrecht zum Haltestift 49 und drücken gegen den Haltestift 49. Aufgrund der Wellenform der Drahtabschnitte 57,58 ist die gespannte Drahtfeder 54 verliersicher festgeklemmt. Im Bereich des Drahtabschnitts 56 sind die beiden freien Drahtenden 59,60 jeweils halbkreisförmig umgebogen und miteinander verschlungen, so daß die Drahtfeder 54 eine geschlossene Form aufweist.

## Patentansprüche

1. Teilbelagscheibenbremse mit einem eine Bremsscheibe (6,34) umgreifenden Bremsgehäuse (1,31,32) und zwei in einem radial nach außen offenen Schacht (7,35) des Bremsgehäuses (1,31,32) radial nach außen entnehmbar angeordneten Bremsklötzen (8,36,37), die mittels einer zumindest auf einen Bremsklotz (8,36,37) direkt einwirkenden und zumindest einen Bremszylinder (11,40,41) aufweisenden hydraulischen Betätigungsvorrichtung an die Bremsscheibe (6,34) andrückbar sind, mit sich axial in Richtung der Bremsscheibe (6,34) erstreckenden Vorsprüngen (12,13,43,44,45,46) des Bremsgehäuses (1,31,32), die den Schacht (7,35) in Umfangsrichtung begrenzen und zur Aufnahme der Umfangskräfte bestimmte Abstützflächen (14,15,47) für die Bremsklötze (8,36,37) aufweisen, dadurch **gekennzeichnet**, daß die genannten, in Umfangsrichtung der Bremsscheibe (6,34) paarweise einander gegenüberliegenden Abstützflächen (14,15,47) der Vorsprünge (12,13,43,44,45,46) wie Oberflächensegmente eines mit dem Bremszylinder (11,40,41) koaxialen Zylinders geformt sind und sich in Richtung auf die radial äußere Öffnung des Schachtes (7,35) zu nur soweit erstrecken, daß eine radiale Entnahme der Bremsklötze (8,36,37) durch den Schacht (7,35) möglich ist, daß die Belaghalteplatte (9,38) der Bremsklötze (8,36,37) an ihren in Umfangsrichtung der Bremsscheibe (6,34) liegenden Schmalseiten je einen durch eine gebogene Anlagefläche (16,17,48) begrenzten Abschnitt aufweist, wobei beide Anlageflächen (16,17,48) im wesentlichen wie Segmente eines Kreises um das Zentrum (B) des Bremsklotzes (8,36,37) geformt sind.

2. Teilbelagscheibenbremse nach Anspruch 1, dadurch **gekennzeichnet**, daß die genannten, in Umfangsrichtung der Bremsscheibe (6) paarweise gegenüberliegenden Vorsprünge (12,13) des Bremsgehäuses (1) weitere, vorzugsweise ebene und der radial äußeren Öffnung des Schachtes (7) zugewandte Abstützflächen (22,23) aufweisen und daß die durch den Schacht (7) eingeführten Bremsklötze (8) mittels einer Feder (24) radial nach innen gegen diese Abstützflächen (22,23) gedrückt und damit gegen Herausfallen und Klappern gesichert werden.

3. Teilbelagscheibenbremse nach Anspruch 1, dadurch **gekennzeichnet**, daß zur Führung der Bremsklötze (36,37) zumindest ein im wesentlichen parallel zur Bremsscheibenachse angeordneter Haltestift (49) vorgesehen ist, der am Bremsgehäuse (31,32) lösbar befestigt ist und sich quer durch den radialen Schacht (35) des Bremsgehäuses (31,32) erstreckt und daß die Bremsklötze (36,37) jeweils einen radial nach außen weisenden Vorsprung (52) mit zumindest einer Öffnung (53) zum Durchgang eines Haltestiftes (49) aufweisen.

4. Teilbelagscheibenbremse nach Anspruch 3, dadurch **gekennzeichnet**, daß nur ein Haltestift (49) vorgesehen ist, der in der Mitte des Schachtes (35) angeordnet ist.

5. Teilbelagscheibenbremse nach einem der Ansprüche 3 oder 4, dadurch **gekennzeichnet**, daß die Bremsklötze (36,37) mittels einer am Haltestift (49) anliegenden Niederhaltefeder (54) gegenüber dem Bremsgehäuse (31,32) vorgespannt sind.

6. Teilbelagscheibenbremse nach Anspruch 5, dadurch **gekennzeichnet**, daß die Niederhaltefeder (54) aus einem Stück Federdraht geformt ist und im wesentlichen eine rechteckige Gestalt aufweist, wobei zwei im wesentlichen parallel und im Abstand zum Haltestift (49) verlaufende Drahtabschnitte (55,56) jeweils an den radial äußeren Seitenflächen beider Bremsklötze (36,37) anliegen und wobei zwei im wesentlichen senkrecht zum Haltestift (49) verlaufende, vorzugsweise wellenförmige Drahtabschnitte (57,58) am Haltestift (49) anliegen.

7. Teilbelagscheibenbremse nach Anspruch 3, dadurch **gekennzeichnet**, daß zwei Haltestifte vorgesehen und mit Abstand zueinander im Schacht (35) angeordnet sind.

8. Bremsklotz zur Verwendung in einer Teilbelagscheibenbremse nach einem der vorhergehenden Ansprüche, mit einer Belaghalteplatte (9,38) und einem Reibbelag (10,39), dadurch **gekennzeichnet**, daß die Belaghalteplatte (9) zwei Vorsprünge (18,19) aufweist, die unmittelbar neben den Anlageflächen (16,17) in Umfangsrichtung abstehen, wobei die an die gebogenen Anlageflächen (16,17) direkt angrenzenden Schmalseiten (20,21) der Vorsprünge (18,19) im wesentlich senkrecht auf den gebogenen Anlageflächen (16,17) stehen.

9. Bremsklotz nach dem Oberbegriff des Anspruchs 8, dadurch **gekennzeichnet**, daß die Belaghalteplatte (38) mit einem über den Bremsscheibenrand nach außen weisenden Vorsprung (52) versehen ist, der zumindest eine Öffnung (53) zum Durchgang eines Haltestiftes (49) aufweist.

10. Niederhaltefeder zur Verwendung in einer Teilbelagscheibenbremse nach einem der Ansprüche 3 bis 6, dadurch **gekennzeichnet**, daß die Niederhaltefeder (54) aus einem Stück Federdraht besteht und eine im wesentlichen rechteckige Gestalt aufweist, wobei zwei Drahtabschnitte (55,56) im Abstand zueinander im wesentlichen parallel verlaufen und zur Anlage an die Bremsklötze (36,37) bestimmt sind, und wobei zwei weitere im Abstand zueinander angeordnete, vorzugsweise wellenförmige Drahtabschnitte (57,58) im wesentlichen senkrecht zu den beiden ersten Drahtabschnitten (55,56) verlaufen und zur Anlage an einem Haltestift (49) bestimmt sind.

## Claims

1. A spot-type disc brake including a brake housing (1, 31, 32) straddling a brake disc (6, 34), and two brake shoes (8, 36, 37) arranged in a radially outwardly open cavity (7, 35) of the brake housing (1, 31, 32) so as to be removable radially outwardly, which brake shoes (8, 36, 37) can be pressed against the brake disc (6, 34) by means of a hydraulic Actuation device acting directly on at least one brake shoe (8, 36, 37) and at least having one brake cylinder (11, 40, 41), projections (12, 13, 43, 44, 45, 46) of the brake housing (1, 31, 32) which extend axially in the direction of the brake disc (6, 34), confine the cavity (7, 35) in the circumferential direction and have engaging surfaces (14, 15, 47) for the brake shoes (8, 36, 37), which are intended to receive the circumferential forces, **characterized** in that the mentioned engaging surfaces (14, 15, 47) of the projections (12, 13, 43, 44, 45, 46), which surfaces (14, 15, 47) are arranged in the circumferential direction of the brake disc (6, 34) and in pairs so as to face each other, are shaped like surface segments of a cylinder coaxial with the brake cylinder (11, 40, 41) and extend towards the radially outer opening of the cavity (7, 35) so as to enable a radial removal of the brake shoes (8, 36, 37) through the cavity (7, 35), in that, on its narrow sides lying in the circumferential direction of the brake disc (6, 34), the pad carrier plate (9, 38) each time has a section confined by a bent abutting surface (16, 17, 48), with the two abutting surfaces (16, 17, 48) essentially being shaped like segments of a circle around the centre (B) of the brake shoe (8, 36, 37).

2. A spot-type disc brake as claimed in claim 1, **characterized** in that the mentioned projections (12, 13) of the brake housing (1), which projections (12, 13) are arranged in the circumferential direction of the brake disc (6) and in pairs so as to face each other, have further, preferably plane engaging surfaces (22, 23) facing the radially outer open end of the cavity (7), and in that the brake shoes (8) introduced through the cavity (7) are pressed radially inwardly against these engaging surfaces (22, 23) by means of a spring (24) and are thus secured against falling out and rattling.

3. A spot-type disc brake as claimed in claim 1, **characterized** in that at least one holding pin (49), essentially extending in parallel to the brake disc axis, is provided for guiding the brake shoes (36, 37), the holding pin (49) being detachably fastened on the brake housing (31, 32) and transversely extending across the radial cavity (35) of the brake housing (31, 32), and in that each of the brake shoes (36, 37) has a radially outwardly directed projection (52) formed with at least one opening (53) for receiving a a holding pin (49) there through.

4. A spot-type disc brake as claimed in claim 3, **characterized** in that only one holding pin (49) is provided which is arranged in the middle of the cavity (35).

5. A spot-type disc brake as claimed in either of claims 3 or 4, **characterized** in that the brake shoes (36, 37) are prestressed with respect to the brake housing (31, 32) by means of a retaining spring (54) resting on the holding pin (49).

6. A spot-type disc brake as claimed in claim 5, **characterized** in that the retaining spring (54) is shaped from a piece of wire spring having a generally rectangular shape, with two wire sections (55, 56) which generally run in parallel and at a distance to the holding pin (49) in each case resting on the radially outer lateral surfaces of the two brake shoes (36, 37), and with two wire sections (57, 58) which generally run perpendicularly to the holding pin (49) and preferably are curved and resting against the holding pin (49).

7. A spot-type disc brake as claimed in claim 3, **characterized** in that two spaced apart holding pins are provided which extend across the cavity (35).

8. A brake shoe for use in a spot-type disc brake as claimed in any one of the preceding claims, including a pad carrier plate (9, 38) and a friction pad (10, 39), **characterized** in that the pad carrier plate (9) has two projections (18, 19) protruding directly next to the abutting surfaces (16, 17) in the circumferential direction, with the narrow sides (20, 21) of the projections (18, 19) directly adjacent to the curved abutting surfaces (16, 17) generally extending perpendicularly on the curved abutting surfaces (16, 17).

9. A brake shoe as claimed in the preamble of claim 8, **characterized** in that the pad carrier plate (38) is provided with a projection (52) directed outwardly beyond the brake disc edge and having at least one opening (53) therein for receiving a holding pin (49) there through.

10. A retaining spring for use in a spot-type disc brake as claimed in any one of claims 3 through 6, **characterized** in that the retaining spring (54) comprises a piece of spring wire having a generally rectangular shape, with two wire sections (55, 56) generally extending in parallel and at a distance with regard to each other and being adapted to abut on the brake shoes (36, 37), and with two further wire sections (57, 58) which are arranged at a distance with regard to each other and are preferably curved, generally running perpendicularly to the two first wire sections (55, 56) and being adapted to abut against a holding pin (49).

## Revendications

1. Frein à disque à garnitures partielles, comprenant un boîtier de frein (1, 31, 32), qui entoure un disque de frein (6, 34), deux plaquettes de frein (8, 36, 37), qui sont disposées, de façon à pouvoir être extraites radialement vers l'extérieur, dans une cavité (7, 35) du boîtier de frein (1, 31, 32) s'ouvrant radialement vers l'extérieur et qui sont agencées de façon à pouvoir être appliquées sur le disque de frein (6, 34) au moyen d'un dispositif hydraulique d'actionnement exerçant au moins directement son action sur une plaquette de frein (8, 36, 37) et comportant au moins un cylindre de frein (11, 40, 41), et des parties en saillie (12, 13, 43, 44, 45, 46) du boîtier de frein (1, 31, 32) qui se dressent axialement en direction du disque de frein (6, 34) et qui délimitent la cavité (7, 35) suivant la direction circonférentielle et comportent des surfaces (14, 15, 47) d'appui des plaquettes de frein (8, 36, 37) qui sont destinées à recevoir les forces circonférentielles, caractérisé en ce que lesdites surfaces d'appui (14, 15, 47) des parties en saillie (12, 13, 43, 44, 45, 46), qui se font face deux à deux suivant la direction circonférentielle du disque de frein (6, 34), ont la forme de secteurs de surface d'un cylindre ayant le même axe que le cylindre de frein (11, 40, 41) et ne s'étendent en direction de l'ouverture radialement extérieure de la cavité (7, 35) que dans une mesure telle qu'une extraction radiale des plaquettes de frein (8, 36, 37) par la cavité (7, 35) est possible et en ce que la plaquette porte-garniture 9, 38) des plaquettes de frein (8, 36 37) comporte, sur chacun de ses petits côtés disposés suivant la direction circonférentielle du disque de frein (6, 34), une section qui est délimitée par une surface d'appui (16, 17, 48) en forme d'arc, les deux surfaces d'appui (16, 17, 48) ayant pratiquement la forme de segments d'un cercle centré sur le centre (B) de la plaquette de frein (8, 36, 37).

2. Frein à disque à garnitures partielles selon la revendication 1, caractérisé en ce que lesdites parties en saillie (12, 13) du boîtier de frein (1), qui se font face deux à deux suivant la direction circonférentielle du disque de frein (6), comportent deux autres surfaces d'appui (22, 23), de préférence planes, qui font face à l'ouverture radialement extérieure de la cavité (7) et en ce que les plaquettes de frein (8) introduites par la cavité (7) sont appliquées radialement vers l'intérieur en appui sur ces surfaces d'appui (22, 23) au moyen d'un ressort (24), ce qui les empêche de tomber et de cliqueter.

3. Frein à disque à garnitures partielles selon la revendication 1, caractérisé en ce que, pour guider les plaquettes de frein (36, 37), il est prévu au moins une broche de maintien (49) qui est disposée d'une manière pratiquement parallèle à l'axe du disque de frein et est fixée d'une manière amovible au boîtier de frein (31, 32) et qui est orientée transversalement en travers de la cavité radiale (35) du boîtier de frein (31, 32) et en ce que les plaquettes de frein (36, 37) comportent chacune une partie en saillie (52) qui se dresse radialement vers l'extérieur et comporte au moins une ouverture (53) destinée au passage d'une broche de maintien (49).

4. Frein à disque à garnitures partielles selon la revendication 3, caractérisé en ce qu'il est prévu une seule broche de maintien (40) qui est disposée au centre de la cavité (35).

5. Frein à disque à garnitures partielles selon l'une des revendications 3 et 4, caractérisé en ce que les plaquettes de frein (36, 37) sont soumises à une précontrainte vis-à-vis du boîtier de frein (31, 32) au moyen d'un ressort de retenue (54) qui prend appui sur la broche de maintien (40).

6. Frein à disque à garnitures partielles selon la revendication 5, caractérisé en ce que le ressort de retenue (54) est formé d'un morceau de fil métallique pour ressort et possède pratiquement une forme rectangulaire et en ce que deux sections de fil (55, 56) s'étendant d'une manière pratiquement parallèle à la broche de maintien (49) et à distance de cette dernière sont en appui respectivement sur les surfaces latérales radialement extérieures des deux plaquettes de frein (36, 37) et deux sections de fil (57, 58), ayant de préférence une forme ondulée, qui s'étendent d'une manière pratiquement perpendiculaire à la broche de maintien (49), sont en appui sur cette broche de maintien (49).

7. Frein à disque à garnitures partielles selon la revendication 3, caractérisé en ce que deux broches de maintien sont prévues et sont disposées à distance l'une de l'autre dans la cavité (35).

8. Plaquette de frein destinée à être utilisée dans un frein à disque à garnitures partielles selon l'une des revendications précédentes, comprenant une plaque porte-garniture (9, 38) et une garniture de friction (10, 39), caractérisée en ce que la plaque porte-garniture (9) comporte deux parties en saillie (18, 19) qui se dressent directement au voisinage des surfaces d'appui (16, 17) suivant la direction circonférentielle et en ce que les petits côtés (20, 21) des parties en saillie (18, 19) qui sont directement adjacents aux surfaces d'appui (16, 17) en forme d'arc se dressent d'une manière pratiquement perpendiculaire sur ces surfaces d'appui (16, 17) en forme d'arc.

9. Plaquette de frein selon le préambule de la revendication 8, caractérisé en ce que la plaque porte-garniture (38) est pourvue d'une partie en saillie (52) qui fait face vers l'extérieur, au delà du bord du disque de frein, et qui comporte au moins une ouverture (53) destinée au passage d'une broche de maintien (49).

10. Ressort de retenue destiné à être utilisé dans un frein à disque à garnitures partielles selon l'une des revendications 3 à 6, caractérisé en ce que le ressort de retenue (54) est constitué d'un morceau de fil métallique pour ressort et possède une forme pratiquement rectangulaire et en ce que deux sections de fil (55, 56) sont orientées d'une manière pratiquement parallèle, à distance l'une de l'autre, et sont destinées à venir en appui sur les plaquettes de frein (36, 37) et deux autres sections de fil (57, 58), ayant de préférence une forme ondulée et disposées à distance l'une de l'autre, sont orientées d'une manière pratiquement perpendiculaire aux deux premières sections de fil (55, 56) et sont destinées à venir en appui sur une broche de maintien (42).
